# EUROPÄISCHE PATENTSCHRIFT

(11) **EP 2 853 446 B1**
(45) Veröffentlichungstag und Bekanntmachung des Hinweises auf die Patenterteilung: **15.11.2017**
(21) Anmeldenummer: 14186083.3
(22) Anmeldetag: 24.09.2014
(51) Int. Cl.: B60R 5/04

(54) **Laderaumabdeckung**
Loading space cover
Recouvrement de l'espace de chargement

(30) Priorität: 26.09.2013 DE 102013219416
(43) Veröffentlichungstag der Anmeldung: 01.04.2015
(73) Patentinhaber: Ford Global Technologies, LLC, Dearborn, MI 48126 (US)
(72) Erfinder: Spahl, Robert, 51109 Köln (DE); Murray, Andy, Colchester, Essex CO7 6DJ (GB)
(74) Vertreter: Dörfler, Thomas

(56) Entgegenhaltungen:
- EP-B1- 1 932 723

## Beschreibung

Die Erfindung betrifft eine Laderaumabdeckung für Fahrzeuge mit einem zwischen den Rücksitzen und einer Hecktür vorgesehenen Laderaum, bestehend aus einer quer zum Fahrzeug angeordneten Kassette mit einer in Längsrichtung des Fahrzeugs vor- und zurückschiebbaren flexiblen Abdeckplane zur wahlweisen Abdeckung des Laderaums, einer in der Kassette drehbar gelagerten Achse, auf der die Abdeckplane aufspulbar bzw. von dieser abspulbar ist, an beiden Seiten des Laderaums befestigbaren, in Fahrzeugrichtung etwa horizontal verlaufenden Führungsschienen zur Aufnahme der Kassette sowie einer an jeder der beiden Führungsschienen von Hand betätigbaren Schubeinrichtung zum Verschieben der Kassette zwischen einer unmittelbar hinter den Rücksitzen liegenden Gebrauchsposition und einer nach hinten in Richtung zur Hecktür versetzten Zugangsposition.
Bei einer bekannten Laderaumabdeckung JP 2000- 318 528 A ist die Kassette unmittelbar hinter den Rücksitzen mittels Haltestiften in seitliche Halterungen einsetzbar und, wenn sie nicht mehr benötigt wird, durch Zurückziehen der Haltestifte aus den Halterungen wieder herausnehmbar. Die Montage und Demontage dieser Laderaumabdeckung ist schwierig und für die Benutzer äußerst unbequem, da er sich bei der Montage oder Demontage der Kassette weit in den Laderaum hineinbeugen und in dieser Haltung die relativ schwere Kassette an den unmittelbar hinter den Rücksitzen vorgesehenen Halterungen befestigen oder aus diesen lösen muss.
Eine weitere Laderaumabdeckung, von der die Erfindung ausgeht, ist in der EP 1932723 B1. Diese wird mit einem Absperrnetz kombiniert, welches das Eindringen von Ladegut bzw. von Gepäckstücken in den Fahrgastraum verhindern soll, wobei beide Systeme in einem gemeinsamen sogenannten Hauptkörper, der als Doppelkassette ausgebildet ist, untergebracht sind. Um die Zugänglichkeit zu der Laderaumabdeckung und dem Absperrnetz zu erleichtern, ist die Doppelkassette in seitlichen Führungsschienen gelagert und in diesen vor- und zurückschiebbar angeordnet. Auch bei dieser Ausführung erfolgt die Montage oder Demontage der relativ schweren Doppelkassette weit im Innern des Fahrzeugs unmittelbar hinter den Rücksitzen. Das Vor- und Zurückschieben der Doppelkassette dient lediglich dazu, um die Abdeckplane und das Absperrnetz in einer besser zugänglichen Position von Hand ein- und ausfahren zu können.
Der Erfindung liegt die Aufgabe zugrunde, eine Laderaumabdeckung zu schaffen, bei der die Kassette bequemer einbaubar und ausbaubar ist.
Erfindungsgemäß wird diese Aufgabe dadurch gelöst, dass das in Fahrtrichtung vordere Ende jeder Schubeinrichtung je eine Kupplungseinrichtung aufweist, die lösbar mit der Kassette verbindbar ist, dass die Führungsschienen im Bereich der nach hinten versetzten Zugangsposition je eine Entnahme- und Beladestelle für die Kassette aufweisen und dass die Kassette an der Entnahme- und Beladestelle mit der Schubeinrichtung kuppelbar oder von dieser lösbar ist.
Durch die Erfindung kann die Kassette an den Führungsschienen in eine ergonomisch günstige Position verschoben und in dieser Position von den Führungsschienen gelöst werden, wobei sich die Bedienungsperson nur ein kurzes Stück in den Lade- bzw. Gepäckraum beugen muss, um die relativ schwere Kassette in die Schubeinrichtungen einzusetzen oder aus diesen herauszunehmen. Erfindungsgemäß sind an den hinteren Enden der beiden Schubeinrichtungen Handgriffe vorgesehen, mit denen die Schubeinrichtungen und damit die Kassette an den Führungsschienen vor- und zurückschiebbar sind. Die Bedienungsperson kann also zur Entnahme der Kassette diese zu sich heranziehen und diese dann in einer ergonomisch günstigen Lage aus den Führungsschienen und Schubeinrichtungen herausnehmen. Bei der Montage werden die Schubeinrichtungen mittels der Handgriffe ebenfalls in diese zurückversetzte Position verschoben, sodass die Kassette bequem eingesetzt werden kann.
Die an den Führungsschienen vorgesehenen Entnahme- und Beladestellen liegen zweckmäßig etwa auf halber Länge der Führungsschienen. Dadurch können die an den hinteren Enden der Schubeinrichtungen vorgesehenen Handgriffe beim Einsetzen oder Entnehmen der Kassette etwa am hinteren Ende des Laderaums und in der Gebrauchsstellung der Kassette etwa auf halber Länge der Führungsschienen liegen.
Die Entnahme- und Beladestelle an jeder der beiden Führungsschienen kann als Durchgangsöffnung ausgebildet sein, durch die an beiden Enden der Kassette vorgesehene Mitnahmelager hindurchpassen.
Zweckmäßig weisen die Durchgangsöffnungen dabei die Form eines zum Laderaum hin offenen Schlitzes auf.
Als Kupplungseinrichtung zwischen den Schubeinrichtungen und der Kassette können an der Oberseite jeder Schubeinrichtung eine quer zu den Führungsschienen ausgebildete Aufnahmenut vorgesehen sein, in die die Lager der Kassette passen.
Bei völlig zurückgezogenen Schubeinrichtungen liegen die an diesen ausgebildeten Aufnahmenuten vorzugsweise genau unterhalb der jeweiligen Durchgangsöffnung, wobei die Mitnahmelager der Kassette, wenn diese durch die Durchgangsöffnungen hindurch eingesetzt wird, in die Aufnahmenuten einrasten und beim Herausnehmen der Kassette durch die Durchgangsöffnungen nach außen gelangen.

Die Schubeinrichtungen sind erfindungsgemäß an den Führungsschienen fixierbar und können durch Betätigung eines an jedem Handgriff vorgesehenen Auslösehebels lösbar und im gelösten Zustand entlang der Führungsschienen verschiebbar sein. Erfindungsgemäß sind die Schubeinrichtungen mit Klemmvorrichtungen versehen, die automatisch wirken und nur bei Betätigung der Auslösehebel gelöst sind.
Die Erfindung ist in der Zeichnung beispielhaft dargestellt und im Einzelnen an Hand der Zeichnung beschrieben. Es zeigen:
- Fig. 1:: das hintere Ende eines Personenkraftwagens, bei dem bei geöffneter Hecktür der Blick in den Lade- bzw. Gepäckraum ermöglicht ist und wobei eine Abdeckplane den Lade- bzw. Gepäckraum abdeckt,

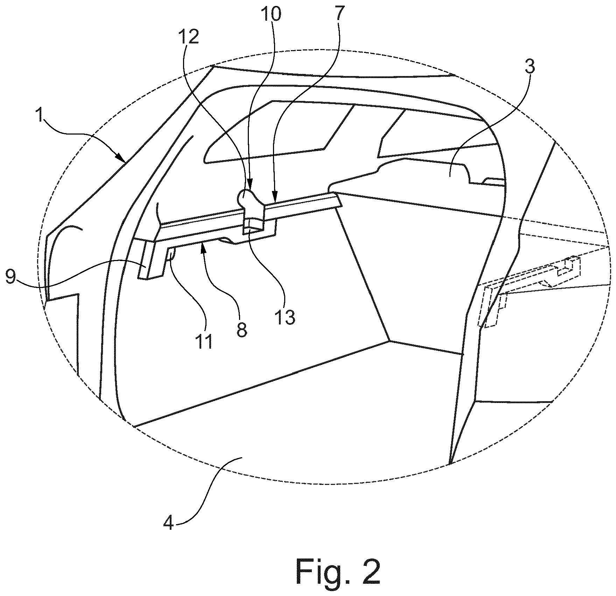

- Fig. 2:: in vergrößerter Darstellung einen Ausschnitt aus Fig. 1, wobei die Abdeckplane weggelassen ist, und
- Fig. 3 bis 6:: in verkleinerter Form das gleiche Heckteil wie in Fig. 1 mit verschiedenen Positionen der Abdeckplane bzw. der Kassette.

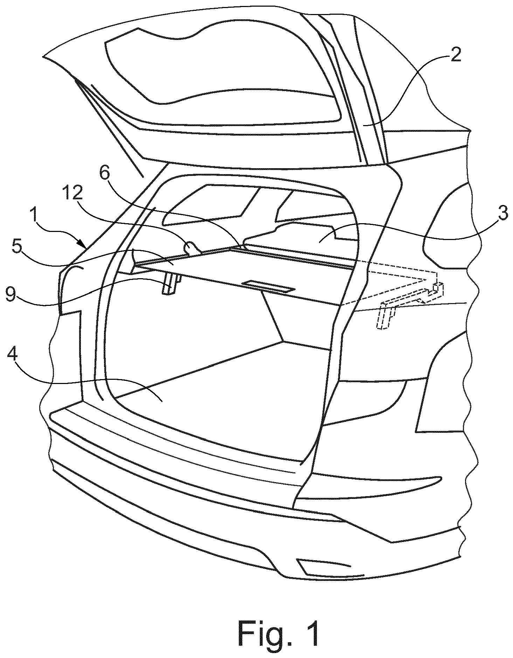

In Fig. 1 ist das Heckteil 1 eines Kombi-Personenkraftwagens mit geöffneter Hecktür 2 dargestellt, sodass der Blick in den zwischen den Rücksitzen 3 und der Hecktür 2 vorgesehenen Laderaum 4 frei ist.

Der Laderaum 4 ist in Höhe des oberen Bereichs der Rücksitze 3 mit einer Abdeckplane 5 versehen, welche aus flexiblem Material besteht und bei Bedarf über das in dem Laderaum 4 verstaute Gepäck gezogen werden kann, damit das Gepäck von außen nicht sichtbar ist.

Die Abdeckplane 5 ist in einer quer zum Fahrzeug angeordneten Kassette 6 untergebracht. Dort kann sie auf einer in der Zeichnung nicht dargestellten drehbar gelagerten Achse aufgespult und von dieser abgespult werden. Die Achse ist mit einem Rückstellmechanismus versehen, sodass die Abdeckplane 5 nach Art eines Rollos aus der Kassette herausgezogen und wieder in diese zurückgespult werden kann.

An beiden Seiten des Laderaums 4 sind in Fahrzeugrichtung etwa horizontal verlaufende Führungsschienen 7 zur Aufnahme der Kassette 6 angebracht. Diese dienen zur Halterung und Führung der Kassette 6 sowie zur Führung des Randes der Abdeckplane 5.

Unter jeder Führungsschiene 7 ist eine Schubeinrichtung 8 längsverschieblich in Richtung der Führungsschienen 7 gelagert, die jeweils mittels eines Handgriffs 9 entlang der Führungsschienen 7 vor- und zurückbewegt werden kann.

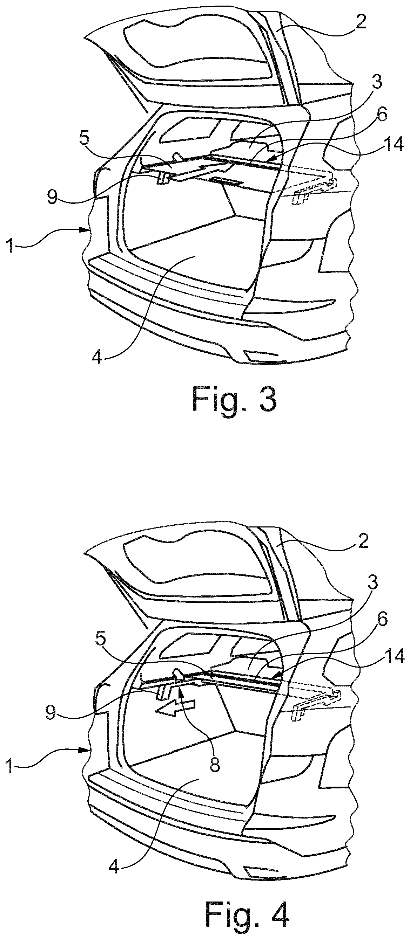

Wie aus den Figuren 3 bis 6 zu entnehmen ist, kann die Kassette 6 mittels der Schubeinrichtungen 8 zwischen einer unmittelbar hinter den Rücksitzen 3 liegenden Gebrauchsposition 14 und einer nach hinten in Richtung zur Hecktür 2 versetzten Zugangsposition 15 verschoben werden.

Die beiden vorderen Enden jeder Schubeinrichtung 8 sind jeweils mit einer Kupplungseinrichtung versehen, mit der die Schubeinrichtungen lösbar mit der Kassette 6 verbindbar sind.

Die Führungsschienen 7 sowie die Schubeinrichtungen 8 sind zur Kupplung mit der Kassette 6 im Bereich der nach hinten versetzten Zugangsposition 15 mit einer Entnahme- und Beladestelle 10 für die Kassette 6 versehen. An dieser nach hinten versetzten Stelle ist die Kassette 6 bequem ein- und ausbaubar und kann lösbar mit den beidseitigen Schubeinrichtungen 8 gekuppelt werden.

Die beidseitig an den Führungsschienen 7 vorgesehenen Entnahme- und Beladestellen 10 liegen auf etwa halber Länge der Führungsschienen 7. Die an den hinteren Enden der Schubeinrichtungen 8 vorgesehenen Handgriffe 9 liegen bei völlig zurückgezogenen Schubeinrichtungen 8 etwa am hinteren Ende des Laderaums 4, sodass sie von dort aus leicht zu handhaben sind. In der Gebrauchsstellung der Kassette 6, in der diese unmittelbar hinter den Rücksitzen 4 positioniert ist, liegen die an den Enden der Schubeinrichtungen 8 vorgesehenen Handgriffe 9 etwa auf halber Länge der Führungsschienen 7, also etwa auf halber Länge des Laderaums 4, sodass die Handgriffe 9 immer noch leicht zu erreichen sind. Zudem brauchen die Handgriffe 9 aus dieser Position lediglich zurückgezogen zu werden, bis sie die am hinteren des Laderaums 4 befindliche Endstellung einnehmen.

Die Schubeinrichtungen 8 sind an den Führungsschienen 7 fixierbar, und zwar vorzugsweise über in der Zeichnung nicht dargestellte Klemmvorrichtungen, die automatisch einrasten. Zum Lösen dieser Klemmvorrichtungen ist an jedem der Handgriffe 9 ein Auslösehebel 11 vorgesehen, durch dessen Betätigung der Klemmmechanismus gelöst wird, sodass die Schubeinrichtungen 8 unterhalb der Führungsschienen 7 verschoben werden können. Die Auslösehebel 11 sind an den Handgriffen 9 ähnlich wie ein Abdrückhebel an einer Pistole angeordnet. Wenn die Handgriffe 9 mit einer Hand umfasst werden, können die Auslösehebel 11 mit Hilfe des Zeigefingers niedergedrückt werden. Im niedergedrückten Zustand lassen sich dann die Schubeinrichtungen 8 an den Führungsschienen 7 und damit auch die Kassette 6 verschieben. Wenn der Zeigefinger den Auslösehebel 11 wieder verlässt, sind die Schubeinrichtungen 8 mit der Kassette 6 an den Führungsschienen 7 arretiert.

Die Entnahme- und Beladestellen 10, die auf halber Länge der Führungsschienen 7 angeordnet sind, sind zweckmäßig als Durchgangsöffnungen 12 ausgebildet, die die Form eines zum Laderaum 4 hin offenen Schlitzes aufweisen.

Die unterhalb der Führungsschienen 7 verschieblichen Schubeinrichtungen 8 weisen an ihrem zu den Rücksitzen 3 hin weisenden Enden je eine quer zu den Führungsschienen 7 ausgebildete Aufnahmenut 13 auf, in die an den Enden der Kassette 6 vorgesehene, in der Zeichnung nicht dargestellte Mitnahmelager hineinpassen.

In der völlig zurückgezogenen Stellung der Schubeinrichtungen 8 liegen die an diesen ausgebildeten Aufnahmenuten 13 genau unterhalb der jeweiligen Durchgangsöffnung 12, sodass die Mitnahmelager der Kassette 6, wenn diese durch die Durchgangsöffnungen 12 hindurch eingesetzt werden sollen, in die Aufnahmenuten 13 einrasten, sodass die Kassette 6 von dort aus in ihre Gebrauchsposition 14 unmittelbar hinter den Rücksitzen 3 geschoben werden kann.

Beim Herausnehmen der Kassette 6 werden die Schubeinrichtungen 8 wieder zurückgezogen, bis die Aufnahmenuten 13 mit den darin befindlichen Mitnahmelagern der Kassette 6 wieder genau zu den Durchgangsöffnungen 12 fluchten, sodass die Kassette 6 nach oben durch die Durchgangsöffnungen 12 hindurch entnommen werden kann.

In den Figuren 3 bis 6 ist beispielhaft die Demontage einer Kassette 6 dargestellt.

In Fig. 3 befindet sich die Kassette 6 in ihrer Gebrauchsposition 14 unmittelbar hinter den Rücksitzen 3. Die Abdeckplane 5 ist dabei völlig aus der Kassette 6 herausgezogen und überdeckt den Laderaum 4. Die Handgriffe 9 der Schubeinrichtungen 8 befinden sich in diesem Zustand etwa kurz hinter der Mitte der Führungsschienen 7.

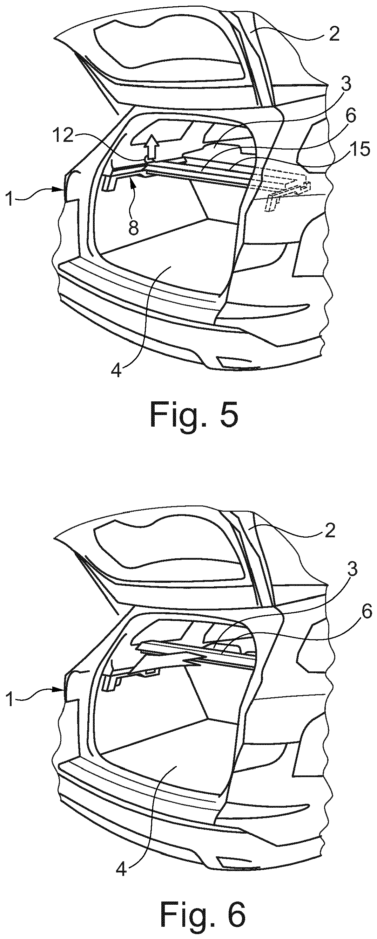

Gemäß Fig. 4 muss vor der Entnahme der Kassette 6 die Abdeckplane 5 in die Kassette 6 eingefahren werden. Dann ergreift die Bedienungsperson die an den Schubeinrichtungen 8 vorgesehenen Handgriffe 9 und betätigt die Auslösehebel 11, sodass die Klemmvorrichtung gelöst und die Schubeinrichtungen 8 an den Führungsschienen 7 verschoben werden können. Die Bedienungsperson zieht dann die Schubeinrichtungen 8 mittels der Handgriffe 9 bei gedrückten Auslösehebeln 11 bis in die zurückgezogene Position zurück, in der die Aufnahmenuten 13 genau unterhalb der Durchgangsöffnungen 12 zu liegen kommen, wie in Fig. 5 dargestellt. In dieser Position kann die Bedienungsperson die Kassette 6 bequem nach oben in die in Fig. 6 dargestellte Position anheben und nach hinten aus dem Laderaum 4 heraus entnehmen. Die Kassette 6 kann dann, wenn sie nicht gebraucht wird, entweder im Laderaum 4 verstaut oder außerhalb des Fahrzeugs gelagert werden.

Aufgrund der erfindungsgemäßen Bauweise kann die Kassette 6 relativ kurz ausgebildet sein, sodass sie sich leicht verstauen lässt.

Das Einsetzen der Kassette 6 durch die Durchgangsöffnungen 12 in die an den Schubeinrichtungen 8 vorgesehenen Aufnahmenuten 13 erfolgt in umgekehrter Weise, und zwar beginnend in Fig. 6. Die Kassette 6 wird dann über der Entnahme- und Beladestelle 10 abgesenkt, wobei sie mit ihren in der Zeichnung nicht dargestellten Mitnahmelagern durch die Durchgangsöffnungen 12 hindurch in die Aufnahmenuten 13 der Schubeinrichtungen 8 in die in Fig. 5 dargestellte Position einrastet. Die Bedienungsperson ergreift dann die Handgriffe 9, betätigt die Auslösehebel 11, sodass die Schubeinrichtungen 8 an den Führungsschienen 7 verschiebbar sind, und schiebt die Kassette 6 in die in Fig. 4 dargestellte Gebrauchsposition 14 unmittelbar hinter den Rücksitzen 3. Dann wird die Abdeckplane 5 aus der Kassette 6 herausgezogen, und zwar bis in die in Fig. 4 dargestellte Position, in der sie das in dem Laderaum verstaute Gepäck abdeckt.

Das erfindungsgemäße Prinzip lässt sich auch mit anderen technischen Mitteln lösen. Beispielsweise können die Schubeinrichtungen über beliebige Kupplungen mit der Kassette verbunden werden. Auch ist es möglich, die Schubeinrichtungen in Form von Kabeln auszubilden.

Das wesentliche Merkmal der Erfindung besteht darin, die relativ schwere und unhandliche Kassette 6 bei eingefahrener Abdeckplane 5 nach hinten in die Zugangsposition 15 zu ziehen, sodass sie eine günstige ergonomische Stellung für die Bedienungsperson einnimmt, aus der sie von der Bedienungsperson leicht herausgenommen oder eingesetzt werden kann.

### Bezugszeichenliste

- 1: Heckteil
- 2: Hecktür
- 3: Rücksitze
- 4: Laderaum
- 5: Abdeckplane
- 6: Kassette
- 7: Führungsschienen
- 8: Schubeinrichtungen
- 9: Handgriffe
- 10: Entnahme- und Beladestellen
- 11: Auslösehebel
- 12: Durchgangsöffnungen
- 13: Aufnahmenuten
- 14: Gebrauchsposition
- 15: Zugangsposition

## Patentansprüche

1. Laderaumabdeckung für Fahrzeuge mit einem zwischen den Rücksitzen (3) und einer Hecktür (2) vorgesehenen Laderaum (4), bestehend aus einer quer zum Fahrzeug angeordneten Kassette (6) mit einer in Längsrichtung des Fahrzeugs vor- und zurückschiebbaren flexiblen Abdeckplane (5) zur wahlweisen Abdeckung des Laderaums (4), einer in der Kassette (6) drehbar gelagerten Achse, auf der die Abdeckplane (5) auf- bzw. von dieser abspulbar ist, an beiden Seiten des Laderaums (4) befestigbaren, in Fahrzeugrichtung etwa horizontal verlaufenden Führungsschienen (7) zur Aufnahme der Kassette (6) sowie einer an jeder der beiden Führungsschienen (7) von Hand betätigbaren Schubeinrichtung (8) zum Verschieben der Kassette (6) zwischen einer unmittelbar hinter den Rücksitzen (3) liegenden Gebrauchsposition (14) und einer nach hinten in Richtung zur Hecktür (2) versetzten Zugangsposition (15), wobei das in Fahrtrichtung vordere Ende jeder Schubeinrichtung (8) eine Kupplungseinrichtung aufweist, die lösbar mit der Kassette (6) verbindbar ist, dass die Führungsschienen (7) im Bereich der nach hinten versetzten Zugangsposition (15) je eine Entnahme- und Beladestelle (10) für die Kassette (6) aufweisen und dass die Kassette (6) an der Entnahme- und Beladestelle (10) mit den Schubeinrichtungen (8) kuppelbar und/oder von diesen lösbar ist, wobei an den hinteren Enden der beiden Schubeinrichtungen (8) Handgriffe (9) vorgesehen sind, mit denen die Schubeinrichtungen (8) und damit die Kassette (6) an den Führungsschienen (7) vor- und zurückschiebbar sind, **dadurch gekennzeichnet, dass** die Schubeinrichtungen (8) an den Führungsschienen (7) fixierbar, durch Betätigung eines an jedem Handgriff (9) vorgesehenen Auslösehebels (11) lösbar und im gelösten Zustand entlang der Führungsschienen (7) verschiebbar sind und die Schubeinrichtungen (8) mit Klemmvorrichtungen versehen sind, die automatisch wirken und nur bei Betätigung der Auslösehebel (11) gelöst sind.

2. Laderaumabdeckung nach Anspruch 1, **dadurch gekennzeichnet, dass** die an den Führungsschienen (7) vorgesehenen Entnahme- und Beladestellen (10) etwa auf halber Länge der Führungsschienen (7) liegen.

3. Laderaumabdeckung nach Anspruch 2, **dadurch gekennzeichnet, dass** die an den hinteren Enden der Schubeinrichtungen (8) vorgesehenen Handgriffe (9) beim Einsetzen oder Entnehmen der Kassette (6) am hinteren Ende des Laderaums (4) und in der Gebrauchsstellung (14) der Kassette (6) auf halber Länge der Führungsschienen (7) liegen.

4. Laderaumabdeckung nach einem der Ansprüche 1 bis 3, **dadurch gekennzeichnet, dass** die Entnahme- und Beladestelle (10) an jeder der beiden Führungsschienen (7) als Durchgangsöffnung (12) ausgebildet ist, durch die an den beidseitigen Enden der Kassette (6) vorgesehene Mitnahmelager hindurchpassen.

5. Laderaumabdeckung nach Anspruch 4, **dadurch gekennzeichnet, dass** die Durchgangsöffnungen (12) die Form eines zum Laderaum (4) hin offenen Schlitzes aufweisen.

6. Laderaumabdeckung nach einem der Ansprüche 1 bis 5, **dadurch gekennzeichnet, dass** an der Oberseite jeder Schubeinrichtung (8) eine quer zu den Führungsschienen (7) ausgebildete Aufnahmenut (13) vorgesehen ist, in die die Mitnahmelager der Kassette (6) passen.

7. Laderaumabdeckung nach Anspruch 6. **dadurch gekennzeichnet, dass** bei völlig zurückgezogenen Schubeinrichtungen (8) die an diesen ausgebildeten Aufnahmenuten (13) genau unterhalb der jeweiligen Durchgangsöffnung (12) liegen und dass die Mitnahmelager der Kassette (6), wenn diese durch die Durchgangsöffnungen (12) hindurch eingesetzt wird, in die Aufnahmenuten (13) einrasten und beim Herausnehmen der Kassette (6) durch die Durchgangsöffnungen (12) nach außen gelangen.

## Claims

1. Loading space cover for vehicles having a loading space (4) provided between the rear seats (3) and a rear door (2), consisting of a cassette (6) which is arranged transversely with respect to the vehicle and has a flexible covering tarpaulin (5) which is slideable forward and back in the longitudinal direction of the vehicle and is intended for the optional covering of the loading space (4), a spindle which is mounted rotatably in the cassette (6) and on which the covering tarpaulin (5) can be wound up and from which the covering tarpaulin (5) can be unwound, guide rails (7) which are fastenable on both sides of the loading compartment (4), run approximately horizontally in the direction of the vehicle and are intended for receiving the cassette (6), and a sliding device (8) which is actuable manually on each of the two guide rails (7) and is intended for moving the cassette (6) between a use position (14) located directly behind the rear seats (3) and an access position (15) offset to the rear in the direction of the rear door (2), wherein that end of each sliding device (8) which is at the front in the direction of travel has a coupling device which is connectable releaseably to the cassette (6), that the guide rails (7) each have a removal or loading point (10) for the cassette (6) in the region of the access position (15), which is offset to the rear, and that the cassette (6) is couplable to, and/or releaseable from, the sliding devices (8) at the removal or loading point (10), wherein handles (9) with which the sliding devices (8), and therefore the cassette (6) are slideable forward and back on the guide rails (7) are provided at the rear ends of the two sliding devices (8), **characterized in that** the sliding devices (8) are fixable on the guide rails (7), are releaseable by actuation of a release lever (11) provided on each handle (9) and, in the released state, are displaceable along the guide rails (7), and the sliding devices (8) are provided with clamping devices which act automatically and are released only when the release lever (11) is actuated.

2. Loading space cover according to Claim 1, **characterized in that** the removal and loading points (10) provided on the guide rails (7) are located approximately half way along the guide rails (7).

3. Loading space cover according to Claim 2, **characterized in that** the handles (9) provided at the rear ends of the sliding devices (8) are located at the rear end of the loading space (4) during the insertion or removal of the cassette (6) and, in the use position (14) of the cassette (6), are located half way along the guide rails (7).

4. Loading space cover according to one of Claims 1 to 3, **characterized in that** the removal and loading point (10) on each of the two guide rails (7) is designed as a passage opening (12) through which the carry-along bearings provided at both ends of the cassette (6) pass.

5. Loading space cover according to Claim 4, **characterized in that** the passage openings (12) are in the shape of a slot which is open toward the loading space (4).

6. Loading space cover according to one of Claims 1 to 5, **characterized in that** a receiving groove (13) which is formed transversely with respect to the guide rails (7) and into which the carry-along bearings of the cassette (6) fit is provided on the upper side of each sliding device (8).

7. Loading space cover according to Claim 6, **characterized in that**, when the sliding devices (8) are fully retracted, the receiving grooves (13) formed on said sliding devices are located precisely below the respective passage opening (12), and **characterized in that** the carry-along bearings of the cassette (6), when the latter is inserted through the passage openings (12), latch into the receiving grooves (13) and, when the cassette (6) is taken out through the passage openings (12), pass to the outside.

## Revendications

1. Recouvrement de l'espace de chargement pour des véhicules, comprenant un espace de chargement (4) prévu entre les sièges arrière (3) et un capot arrière (2), constitué d'une cassette (6) disposée transversalement au véhicule avec un plan de recouvrement (5) flexible pouvant être déplacé vers l'avant et vers l'arrière dans la direction longitudinale du véhicule pour le recouvrement sélectif de l'espace de chargement (4), un axe supporté à rotation dans la cassette (6), sur lequel le plan de recouvrement (5) peut être enroulé et déroulé, des rails de guidage (7) pouvant être fixés des deux côtés de l'espace de chargement (4), lesquels s'étendent approximativement horizontalement dans la direction du véhicule pour recevoir la cassette (6), ainsi qu'un dispositif de poussée (8) pouvant être actionné à la main au niveau de chacun des deux rails de guidage (7) pour déplacer la cassette (6) entre une position d'utilisation (14) située directement derrière les sièges arrière (3) et une position d'accès (15) décalée vers l'arrière dans la direction du capot arrière (2), l'extrémité avant, dans le sens de conduite, de chaque dispositif de poussée (8) présentant un dispositif d'accouplement qui peut être connecté de manière amovible à la cassette (6), les rails de guidage (7) présentant, dans la région de la position d'accès (15) décalée vers l'arrière, à chaque fois une zone d'enlèvement et de chargement (10) pour la cassette (6) et la cassette (6) pouvant être accouplée au dispositif de poussée (8) au niveau de la zone d'enlèvement et de chargement (10) et/ou pouvant être détachée de celui-ci, des poignées (9) étant prévues aux extrémités arrière des deux dispositifs de poussée (8), avec lesquelles les dispositifs de poussée (8) et par conséquent la cassette (6) peuvent être avancés et ramenés en arrière sur les rails de guidage (7),
**caractérisé en ce que**
les dispositifs de poussée (8) peuvent être fixés aux rails de guidage (7) par actionnement d'un levier de déclenchement (11) prévu sur chaque poignée (9) et peuvent être déplacés dans l'état desserré le long des rails de guidage (7) et les dispositifs de poussée (8) sont pourvus de dispositifs de serrage qui agissent automatiquement et qui ne sont desserrés que lors de l'actionnement du levier de déclenchement (11).

2. Recouvrement d'espace de chargement selon la revendication 1,
**caractérisé en ce que**
les zones d'enlèvement et de chargement (10) prévues sur les rails de guidage (7) sont situées approximativement à la moitié de la longueur des rails de guidage (7).

3. Recouvrement d'espace de chargement selon la revendication 2,
**caractérisé en ce que**
les poignées (9) prévues au niveau des extrémités arrière des dispositifs de poussée (8) sont situées lors de l'insertion ou de l'enlèvement de la cassette (6) à l'extrémité arrière de l'espace de chargement (4) et dans la position d'utilisation (14) de la cassette (6) à la moitié de la longueur des rails de guidage (7).

4. Recouvrement d'espace de chargement selon l'une quelconque des revendications 1 à 3,
**caractérisé en ce que**
les zones d'enlèvement et de chargement (10) au niveau de chacun des deux rails de guidage (7) sont réalisées sous forme d'ouverture traversante (12) à travers laquelle passent des paliers d'entraînement prévus au niveau des extrémités des deux côtés de la cassette (6).

5. Recouvrement d'espace de chargement selon la revendication 4,
**caractérisé en ce que**
les ouvertures traversantes (12) présentent la forme d'une fente ouverte vers l'espace de chargement (4).

6. Recouvrement d'espace de chargement selon l'une quelconque des revendications 1 à 5,
**caractérisé en ce**
**qu'**au niveau du côté supérieur de chaque dispositif de poussée (8) est prévue une rainure de réception (13) réalisée transversalement aux rails de guidage (7), dans laquelle passent les paliers d'entraînement de la cassette (6).

7. Recouvrement d'espace de chargement selon la revendication 6,
**caractérisé en ce que**
lorsque les dispositifs de poussée (8) sont complètement ramenés en arrière, les rainures de réception (13) réalisées sur ceux-ci sont situées exactement en dessous de l'ouverture traversante respective (12) et **en ce que** les paliers d'entraînement de la cassette (6), lorsque celle-ci est insérée à travers les ouvertures traversantes (12), s'encliquètent dans les rainures de réception (13) et lors du retrait de la cassette (6) parviennent vers l'extérieur à travers les ouvertures traversantes (12).
